# EUROPÄISCHE PATENTSCHRIFT

(11) **EP 3 000 308 B1**
(45) Veröffentlichungstag und Bekanntmachung des Hinweises auf die Patenterteilung: **07.06.2017**
(21) Anmeldenummer: 15175604.6
(22) Anmeldetag: 07.07.2015
(51) Int. Cl.: A01F 7/04, A01F 12/24

(54) **MÄHDRESCHER MIT EINER TANGENTIAL ANGEORDNETEN DRESCHEINRICHTUNG**
COMBINE HARVESTER WITH A TANGENTIALLY ARRANGED THRESHING DEVICE
MOISSONNEUSE-BATTEUSE DOTEE D'UN DISPOSITIF DE BATTAGE DISPOSE TANGENTIELLEMENT

(30) Priorität: 26.09.2014 DE 102014114025
(43) Veröffentlichungstag der Anmeldung: 30.03.2016
(73) Patentinhaber: CLAAS Selbstfahrende Erntemaschinen GmbH, 33428 Harsewinkel (DE)
(72) Erfinder: Bußmann, Jens, 49179 Ostercappeln (DE); Holtmann, Bernd, 48324 Sendenhorst (DE)

(56) Entgegenhaltungen:
- EP-A1- 0 230 276
- EP-A1- 1 147 701
- DE-A1- 10 353 385

## Beschreibung

Die vorliegende Erfindung betrifft einen Mähdrescher mit einer tangential angeordneten Drescheinrichtung gemäß dem Oberbegriff des Anspruches 1.

Aus der EP 1 284 098 A1 ist ein Mähdrescher bekannt. Der Mähdrescher weist eine tangential angeordnete Drescheinrichtung auf, welche wenigstens eine Dreschtrommel und wenigstens einen mit Bezug auf die Dreschtrommel abstandsveränderlichen Abscheidekorb umfasst. Der Drescheinrichtung ist eine zwei Abscheiderotoren umfassende Axialabscheidevorrichtung nachgeordnet, die einen sich zumindest über die Breite der Abscheiderotoren erstreckenden Einlaufbereich aufweist, an den der wenigstens eine Abscheidekorb der Drescheinrichtung angrenzt.

Die EP 0 230 276 A1 offenbart einen Mähdrescher mit einer im Axialfluss arbeitenden Trenneinrichtung und einem im Tangentialfluss arbeitenden Dreschwerk. Um bei mehrrotorigen Trenneinrichtungen den Gutstrom in Richtung der Trennrotoren zu leiten, sind auf der Innenseite des Dreschkorbes konvergierende Leitflächen angeordnet.
Bei Mähdreschern der eingangs genannten Art ist die Gleichmäßigkeit der Gutabgabe von der Drescheinrichtung an die Axialabscheidevorrichtung für die Gutannahme und Weiterverarbeitung von sehr großer Bedeutung. Die der Axialabscheidevorrichtung vorgeschaltete Zuführtrommel nimmt das von der Drescheinrichtung abgegebene Erntegut an und führt es den beiden Trennrotoren zu. Der Zuführtrommel kommt dabei auch die Aufgabe zu, das der Axialabscheidevorrichtung zuzuführende Erntegut zu vergleichmäßigen, damit beiden Trennrotoren im Wesentlichen die gleiche zu verarbeitende Erntegutmenge zugeführt wird. Ungleichmäßigkeiten in der zugeführten Erntegutmenge wirken sich sowohl auf den Abscheideprozess durch die Axialabscheidevorrichtung als auch auf den nachfolgenden Reinigungsprozess aus. Weiterhin kann es bei einer ungleichmäßigen Erntegutverteilung bei der Annahme des Erntegutes durch die Zuführtrommel der Effekt auftreten, dass das Erntegut während einer Umdrehung der Zuführtrommel nicht vollständig an die Trennrotoren abgegeben wird, sondern vielmehr entlang einer die Drescheinrichtung begrenzenden Wandung oberhalb der Drescheinrichtung wieder nach vorne gefördert wird, so dass das Erntegut die Drescheinrichtung erneut durchläuft. Wird auf Grund der Erntegutart der Abstand zwischen der Dreschtrommel und dem Abscheidekorb verändert, so bildet sich im Übergangsbereich vom Abscheidekorb zum Einlaufbereich eine Stufe aus. Hier kann es zu einer ungleichmäßigen Kumulation von Erntegut kommen, welches dann im Ganzen von der Zuführtrommel mitgefördert wird. Etwaige auf der Zuführtrommel vorgesehene Leitschienen oder dergleichen, die zu einer Vergleichmäßigung der Erntegutverteilung über die Breite des Einlaufbereiches beitragen sollen, sind in solchen Situationen in ihrer Einflussnahme limitiert.

Aufgabe der vorliegenden Erfindung ist es, einen Mähdrescher der eingangs genannten derart weiterzubilden, dass eine gleichmäßigere Erntegutaufteilung vor der Annahme von Erntegut durch die Zuführtrommel erreicht wird.

Diese Aufgabe wird erfindungsgemäß durch die kennzeichnenden Merkmale des Anspruches 1 gelöst.

Vorteilhafte Weiterbildungen sind Gegenstand der Unteransprüche.

Gemäß dem Anspruch 1 wird vorgeschlagen, dass im Übergangsbereich vom Abscheidekorb zum Einlaufbereich ein sich im Wesentlichen in Längsrichtung des Mähdreschers erstreckendes Leitelement angeordnet ist, welches mit dem Abscheidekorb in Eingriff steht und dessen Abstand zur Dreschtrommel bei einer Veränderung des Abstandes Abscheidekorb zur Dreschtrommel konstant bleibt. Diese Anordnung hat den Vorteil, dass das Leitelement vor der Erntegutannahme durch die Zuführtrommel auf den Erntegutstrom einwirkt. Es wirken somit das Leitelement und die rotierende Dreschtrommel bereits auf das Erntegut ein, um eine Vergleichmäßigung der Verteilung zu begünstigen, bevor die Erntegutannahme durch die Zuführtrommel erfolgt. Erreicht wird dies durch ein Zerteilen des Erntegutstromes zwischen dem ortfesten Leitelement und der rotierenden Dreschtrommel. Des Weiteren wirkt das Leitelement unabhängig von dem eingestellten Abstand zwischen der zumindest einen Dreschtrommel und dem zugehörigen Abscheidekorb respektive Dreschkorb auf das Erntegut ein.

Vorzugsweise kann sich das Leitelement abschnittsweise in Umfangsrichtung des Abscheidekorbes erstrecken. Dabei überragt das Leitelement den Abscheidekorb in radialer Richtung auch dann, wenn der Abstand zwischen der Dreschtrommel und dem Abscheidekorb sein Minimum erreicht.

Insbesondere kann das Leitelement an einem rampenförmigen Abschnitt angeordnet sein, der sich in axialer Richtung der Axialabscheidevorrichtung ansteigend abschnittsweise über den Einlaufbereich erstreckt. Der rampenförmige Abschnitt erstreckt sich ausgehend von der Vorderkante des Einlaufbereiches bis etwa auf Höhe der Rotationsachse des jeweiligen Trennrotors. Dabei ist der rampenförmige Abschnitt im Wesentlichen mittig zwischen den beiden Trennrotoren im Einlaufbereich angeordnet.

Weiterhin kann der Abscheidekorb eine mit der Form des Leitelementes korrespondierende Ausnehmung aufweisen. Hierdurch kann erreicht werden, dass die Abstände zwischen dem Leitelement und dem dieses seitlich umgebenden Abscheidekorb in der Position des Abscheidekorbes, in der der Abstand zur Dreschtrommel am geringsten ist, minimiert ist.

Gemäß einer bevorzugten Ausführungsform kann das Leitelement im Wesentlichen V-förmig ausgebildet sein. Das im Wesentlichen V-förmige Leitelement erstreckt sich in eine in den Abscheidekorb eingearbeitete Ausnehmung korrespondierender Form. Dazu kann das im Wesentlichen V-förmige Leitelement unter einem Winkel zur Oberfläche des rampenförmigen Abschnitts geneigt angeordneten sein. Das im Wesentlichen V-förmige Leitelement kann aus einem abgewinkelten Metallabschnitt bestehen oder aus miteinander verbundenen Stegen. Insbesondere kann das im Wesentlichen V-förmige Leitelement nahezu senkrecht zur Oberfläche des rampenförmigen Abschnitts stehend angeordnet sein. Zusätzlich kann an die Spitze des im Wesentlichen V-förmigen Leitelementes in einem sich in Richtung des Abscheidekorbes verjüngenden Vorsprung münden. In Gutflussrichtung der Drescheinrichtung gesehen wirkt dieser Vorsprung wie eine Rampe, welche das Erntegut in diesem Bereich geringfügig vom Abscheidekorb abhebt, bevor das Erntegut zwischen die Stege des Leitelementes und die Dreschtrommel gerät. Die Spreizung des im Wesentlichen V-Förmigen Leitelementes entspricht etwa der Breite des rampenförmigen Abschnitts, an dem das Leitelement angebracht ist.

Gemäß einer alternativen Ausführungsform kann das Leitelement im Wesentlichen schneidenförmig ausgebildet sein.

Hierzu kann sich das im Wesentlichen schneidenförmige Leitelement im Wesentlichen achsparallel zur Längsachse der Axialabscheidevorrichtung erstrecken.

Vorzugsweise kann auf dem in axialer Richtung der Axialabscheidevorrichtung ansteigenden rampenförmigen Abschnitt zumindest ein Ableitelement angeordnet sein. Das zumindest eine Ableitelement kann Y-förmig ausgeführt sein, wobei es aus einzelnen Stegen gebildet sein kann, die mittig zusammenlaufen.

Insbesondere kann zumindest das Leitelement lösbar im Einlaufbereich angeordnet sein. Da es unmittelbar dem Erntegutstrom ausgesetzt ist, ist es von Vorteil, das Leitelement bei Bedarf austauschen zu können. Hierzu kann das Leitelement selbst oder in Verbindung mit dem rampenförmigen Abschnitt ausgetauscht werden.

Die vorliegende Erfindung wird nachfolgend anhand von in den Zeichnungen dargestellten Ausführungsbeispielen näher erläutert.

Es zeigen:
- Fig. 1: eine schematische Darstellung eines Mähdreschers;
- Fig. 2: eine schematische Teilansicht einer Drescheinrichtung sowie einer Axialabscheidevorrichtung von der Seite in geschlossener Position des Abscheidekorbes;
- Fig.3: eine perspektivische Teilansicht der Drescheinrichtung und der Axialabscheidevorrichtung gemäß Fig. 2;
- Fig. 4: eine schematische Teilansicht der Drescheinrichtung und der Axialabscheidevorrichtung von der Seite gemäß Fig. 2 in offener Position des Abscheidekorbes;
- Fig.5: eine perspektivische Teilansicht der Drescheinrichtung und der Axialabscheidevorrichtung gemäß Fig. 4;
- Fig. 6: eine perspektivische Teilansicht der Drescheinrichtung und der Axialabscheidevorrichtung mit einer zweiten Ausführungsform eines Leitelementes in geschlossener Position des Abscheidekorbes;
- Fig. 7: eine perspektivische Teilansicht der Drescheinrichtung und der Axialabscheidevorrichtung gemäß Fig. 6 in offener Position des Abscheidekorbes.

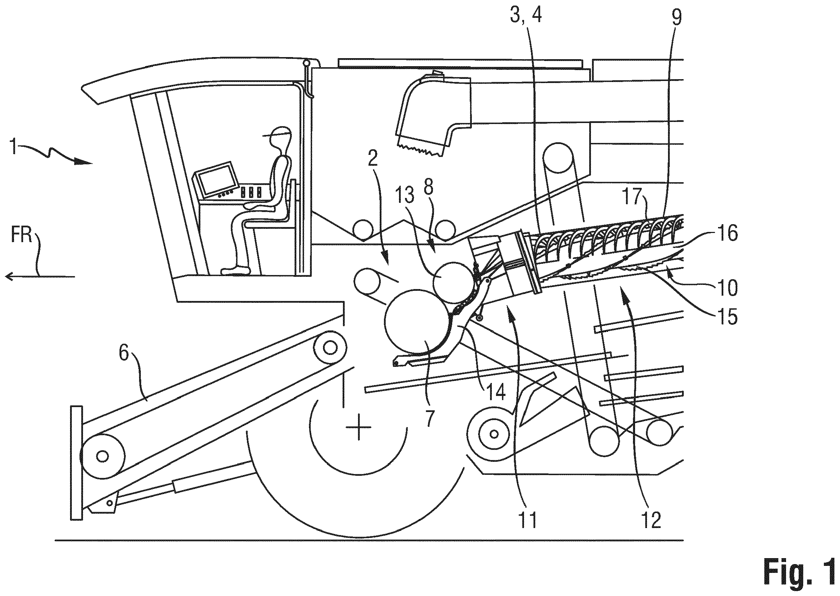

In Fig. 1 ist eine schematische Seitenansicht eines selbstfahrenden Mähdrescher 1 dargestellt, der mit einem nach dem Tangentialflussprinzip arbeitenden Drescheinrichtung 2 und einer der Drescheinrichtung 2 nachgeordneten Axialabscheidevorrichtung 3 als Trennvorrichtung 4 ausgerüstet ist. Das Erntegut wird von einem Vorsatzgerät, wie einem Schneidwerk oder einem Maispflücker, aufgenommen, welches das Erntegut dem Schrägförderer 6 zuführt. Der Schrägförderer 6 übergibt das Erntegut an die Drescheinrichtung 2, welche das Erntegut mechanisch bearbeitet. Von der Drescheinrichtung 2 gelangt ein im Wesentlichen von ausgedroschenen Halmen gebildeter Gutstrom mittels eines als eine Zuführtrommel 13 ausgeführten Fördermittels 8 in die Axialabscheidevorrichtung 3. Die Drescheinrichtung 2 umfasst zumindest eine Dreschtrommel 7 sowie zumindest einen Abscheidekorb 14, der die Dreschtrommel 7 abschnittsweise umschließt. Der Abstand zwischen der Dreschtrommel 7 und dem Abscheidekorb 14 ist veränderbar. Die Abstandsänderung erfolgt in Abhängigkeit von der zu verarbeitenden Erntegutart, wie Getreide, Bohnen oder Mais, sowie den Betriebsbedingungen, wie Erntegutfeuchte und/oder anderer Parameter.

Der Axialabscheidevorrichtung 3 besteht aus zwei parallel in Fahrtrichtung FR des Mähdreschers 1 hintereinander liegenden bereichsweise als Sieb- oder Lochfläche ausgebildeten Rotorgehäusen 9, in denen jeweils ein rotierend angetriebener Trennrotor 10 angeordnet ist, wobei die Trennvorrichtung 4 einen Einlaufbereich 11 beziehungsweise Annahmebereich und einen diesem nachgeordneten Abscheidebereich 12 aufweist.

Im Einlaufbereich 11 ist jeder Trennrotor 10 als mit Förderschneckenabschnitten bestückter Kegelstumpf und im Abscheidebereich 12 als mit beispielsweise Förderelementen 15 besetztes zylinderförmiges Kernrohr 16 ausgebildet, wobei der große Durchmesser des Kegelstumpfes dem Durchmesser des Kernrohrs 16 entspricht. Die Förderelemente 15 transportieren im Zusammenwirken mit innerhalb des Abscheidebereiches 12 im Rotorgehäuse 9 angebrachten Führungsleisten 17 den Gutstrom in den rückwärtigen Bereich des Mähdreschers 1, wobei insbesondere die noch im Gutstrom enthaltenen Körner, sowie eventuell Kurzstroh und Spreu abgetrennt und abgeschieden werden.

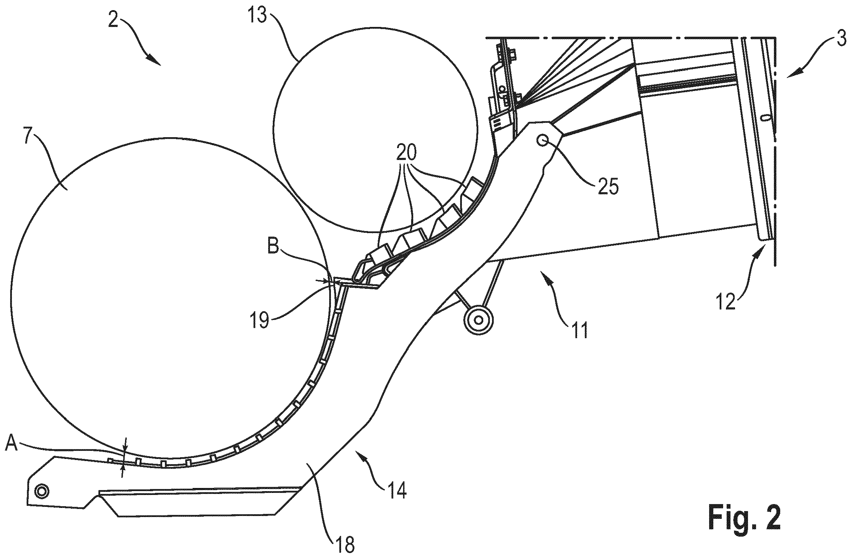

Die Darstellung in Fig. 2 zeigt eine schematische Teilansicht der Drescheinrichtung 2 sowie der Axialabscheidevorrichtung 3 von der Seite in geschlossener Position des Abscheidekorbes 14, das heißt mit einem minimalen Abstand A des Abscheidekorbes 14 zu der Dreschtrommel 7, wie er beispielsweise bei der Verarbeitung von Getreide gewählt wird. Der Abscheidekorb 14 weist zwei parallel zueinander angeordnete Korbwangen 18 auf, die an der Axialabscheidevorrichtung 3 schwenkbar angelenkt sind. Weiterhin ist der Darstellung in Fig. 2 zu entnehmen, dass sich in Umfangsrichtung des Abscheidekorbes 14 ein Leitelement 19 abschnittsweise in dieses hinein erstreckt. Das Leitelement 19 überragt den Abscheidekorb 14 in radialer Richtung. Dabei bildet sich zwischen der rotierenden Dreschtrommel 7 und der der Dreschtrommel 7 zugewandten Oberseite des Leitelementes 19 ein schmaler Spalt B aus.

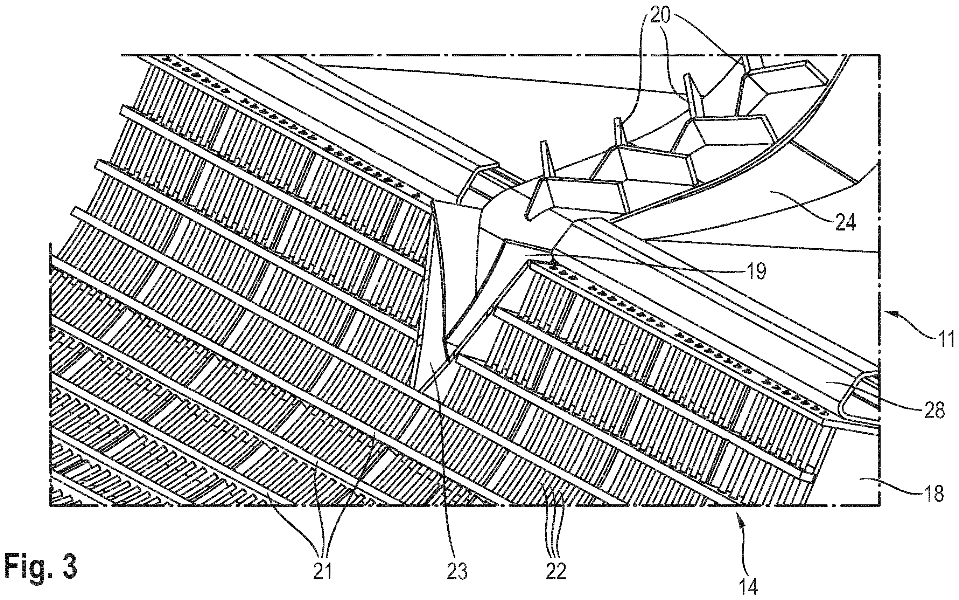

In Fig. 3 ist eine perspektivische Teilansicht der Drescheinrichtung 2 und der Axialabscheidevorrichtung 3 gemäß Fig. 2 dargestellt. Dargestellt ist ein Teil des Abscheidekorbes 14 ohne die zugehörige Dreschtrommel 7. Zwischen den Korbwangen 18 sind, quer zu diesen, Abscheidekorbstege 21 angeordnet. Achsparallel zu den Korbwangen 18 ist der Abscheidekorb 14 mit einer Vielzahl von Korbdrähten 22 durchzogen, die gemeinsam mit den Abscheidekorbstegen 21 Öffnungen für von der Dreschtrommel 7 ausgedroschenes Erntegut begrenzen. Aus dieser Darstellung ist die Form und Struktur des Leitelementes 19 ersichtlich. Das Leitelement 19 erstreckt sich in eine Ausnehmung 23 im Abscheidekorb 14. Die Ausnehmung 23 korrespondiert im Wesentlichen mit der Form des Leitelementes 19. Ausgehend von einem Rahmenelement 28 erstreckt sich die Ausnehmung 23 in Umfangsrichtung des Abscheidekorbes 14. Das Leitelement 19 ist im Wesentlichen V-förmig ausgebildet. Die Anordnung des Leitelementes 19 ist an einem Ende eines rampenförmigen Abschnittes 24, welches im Einlaufbereich 11 der Axialabscheidevorrichtung 3 angeordnet ist, vorgesehen. Der rampenförmige Abschnitt 24 ist auf der der Zuführtrommel 13 zugewandten Seite des Einlaufbereiches 11 angeordnet. Das Ende des rampenförmigen Abschnittes 24, auf welchem das Leitelement 19 angeordnet ist, mündet in einen Übergangsbereich zwischen dem Abscheidekorb 14 und dem Einlaufbereich 11. Das Leitelement 19 erstreckt sich in die von der oberen Kante des Abscheidekorbes14 ausgehende Ausnehmung 23. Der Abstand zwischen dem Leitelement 19 und der Dreschtrommel 7 ist derart gewählt, dass das Leitelement 19 nahezu an den Hüllkreis der Dreschtrommel 7 heranreicht. Auf Grund der geringen achsparallelen Ausdehnung des Leitelementes 19 zur Dreschtrommel 7 ist der Einfluss auf die Erntegutqualität äußerst gering. Hingegen ist das Zusammenwirken des Leitelementes 19 mit der rotierenden Dreschtrommel 7 bei der Auftrennung und Ablenkung in Richtung der Trennrotoren 10 äußerst effizient.

Des Weiteren ist auf dem in axialer Richtung der Axialabscheidevorrichtung 3 ansteigenden rampenförmigen Abschnitt 24 zumindest ein Ableitelement 20 angeordnet sein. Das zumindest eine Ableitelement 20 kann Y-förmig ausgeführt sein, wobei es aus einzelnen Stegen gebildet sein kann, die mittig zusammenlaufen. Das zumindest eine Ableitelement 20 unterstützt die Zuführung des Erntegutes in den jeweiligen Trennrotor 10. Zudem wird der Effekt, dass Erntegut entlang des rampenförmigen Abschnittes 24 von der Zuführtrommel 13 in deren Umfangsrichtung mitgenommen wird.

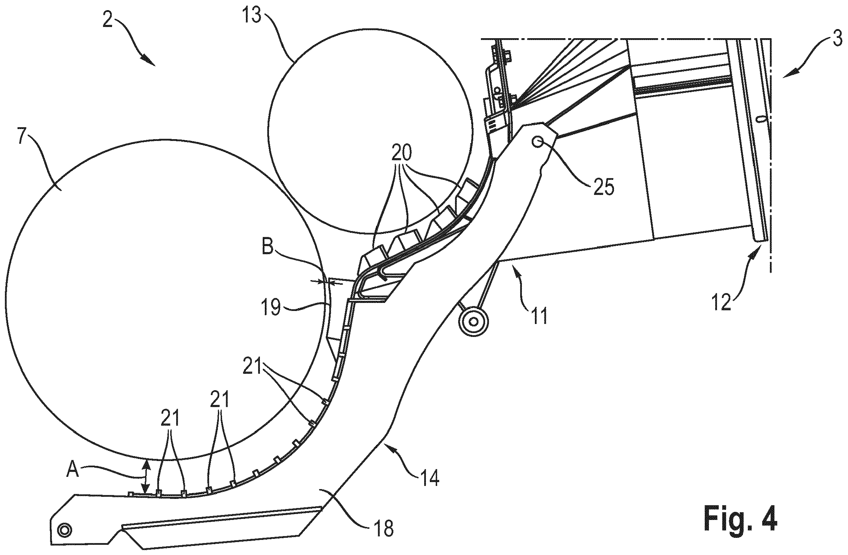

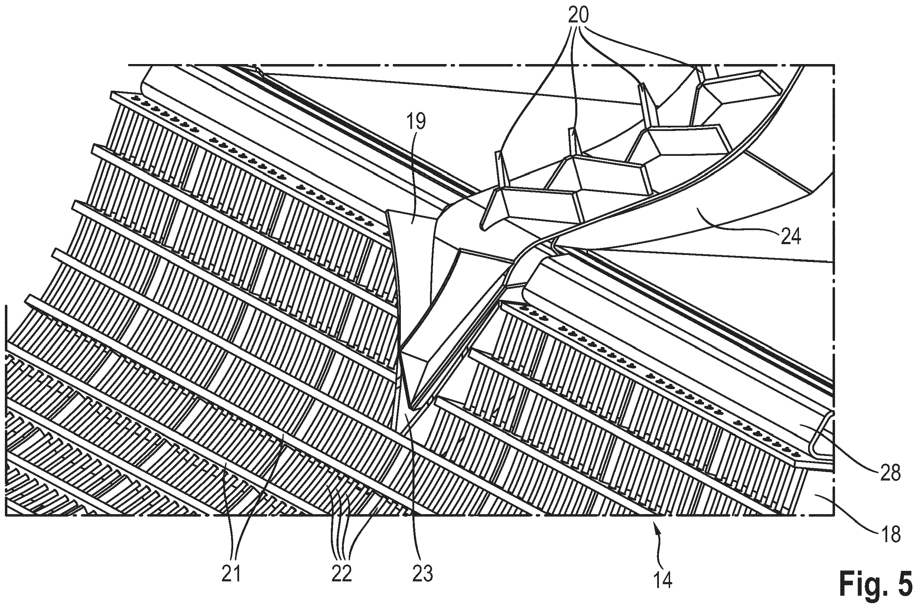

In Fig. 4 ist eine schematische Teilansicht der Drescheinrichtung 2 und der Axialabscheidevorrichtung 3 von der Seite gemäß Fig. 2 in offener Position des Abscheidekorbes 14 dargestellt. Die Darstellung in Fig. 5 zeigt eine perspektivische Teilansicht der Drescheinrichtung 2 und der Axialabscheidevorrichtung 3 gemäß Fig. 4. In diesen Figuren 4 und 5 weist der Abscheidekorb 14 einen erheblich vergrößerten Abstand A von der Dreschtrommel 7 auf. Der Abscheidekorb 14 ist in offener Position dargestellt. Hierzu kann der Abscheidekorb 14 mittels einer nicht naher dargestellten Aktorik um eine Drehachse 25 an der Abscheidevorrichtung 3 verschwenkbar sein. Wie weiterhin aus der Darstellung ersichtlich ist, hat sich dabei die Position des Leitelementes 19 gegenüber der Dreschtrommel 7 nicht verändert. Das von der Dreschtrommel 7 abgegebene Erntegut, dessen Schichtdicke auf Grund des erhöhten Abstandes A zwischen der Dreschtrommel 7 und dem Abscheidekorb 14 zunimmt, wird von dem Leitelement 19, welches seinen Abstand B zu der Dreschtrommel 7 nicht verändert hat, in gleicher Weise aufgetrennt und abgelenkt, wie bei einem geringeren Abstand A des Abscheidekorbes 14 zur Dreschtrommel 7. In Fig. 5 ist deutlich zu erkennen ist, wie weit das Leitelement 19 über die Oberfläche des Abscheidekorbes 14 hinausragt.

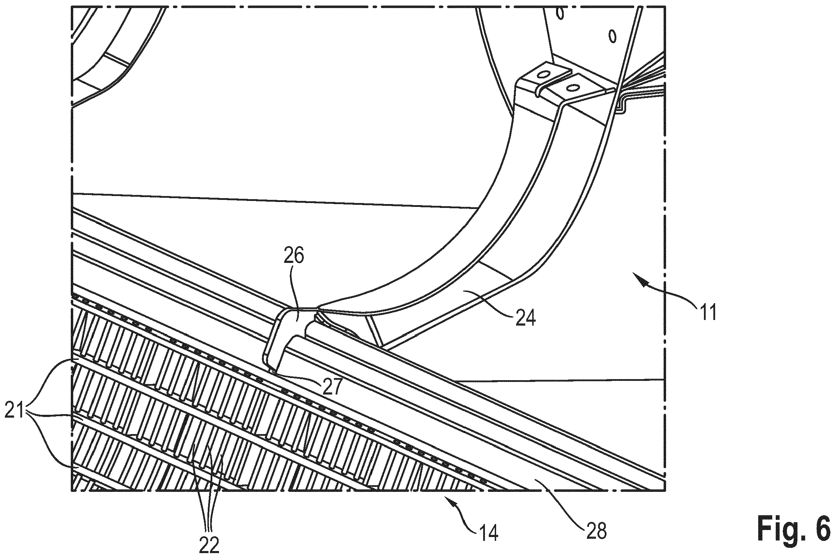

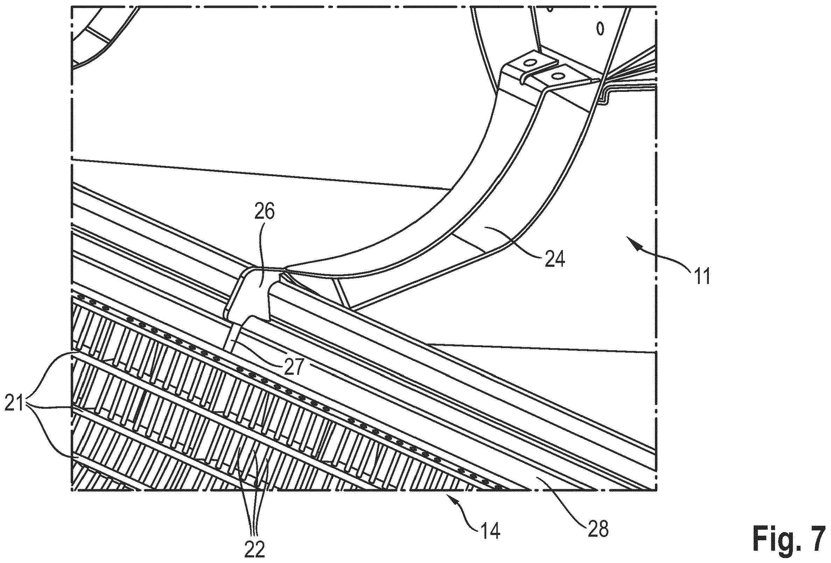

In den Fig. 6 und 7 ist eine alternative Ausführungsform eines Leitelementes 26 dargestellt. Die Darstellung in Fig. 6 zeigt eine perspektivische Teilansicht der Drescheinrichtung 2 und der Axialabscheidevorrichtung 3 in geschlossener Position des Abscheidekorbes 14. Der Abstand zwischen der Dreschtrommel 7 und dem Abscheidekorb 14 ist sehr gering, entsprechend der Darstellung in Fig. 2. Der Abscheidekorb 14 weist ein Rahmenelement 28 auf, welches sich im Wesentlichen über die Breite des Abscheidekorbes 14 erstreckt. Das Rahmenelement 28 bildet einen Übergang zwischen dem Abscheidekorb 14 und dem Einlaufbereich 11 der Axialabscheidevorrichtung 3, um den Gutfluss zu begünstigen. Das Rahmenelement 28 weist eine Ausnehmung 27 auf, in welche das Leitelement 26 abschnittsweise hineinragt. Die Ausnehmung 27 korrespondiert hinsichtlich ihrer Abmessungen mit dem Leitelement 26. Somit ist einerseits der Spalt zwischen dem Leitelement 26 und dem Rahmenelement 28, in welchem die Ausnehmung 27 eingebracht ist, sehr gering, um das Eindringen von Erntegut weitestgehend zu vermeiden. Andererseits ist die Tiefe der Ausnehmung 27 so gewählt, dass auch ein minimaler Abstand zwischen dem Abscheidekorb 14 und dem Hüllkreis der Dreschtrommel 7 einstellbar ist, ohne dass das Leitelement 27 mit dem Rahmenelement 28 kollidiert. Das Leitelement 26 ist, wie bereits weiter oben ausgeführt, endseitig an dem rampenförmigen Abschnitt 24 angeordnet und erstreckt sich Abschnittsweise in den Abscheidekorb 14 der Drescheinrichtung 2. Das Leitelement 26 ist im Wesentlichen schneidenförmig ausgebildet, wobei es sich achsparallel zur Längsachse des Mähdreschers 1 erstreckt. Das Leitelement 26 überragt die Abscheidekorbstege 21 des Abscheidekorbes 14, so dass auch bei dieser Ausführungsform des Leitelementes 26 der Abstand zwischen dem Hüllkreis der Dreschtrommel 7 und dem Leitelement 26 minimiert ist.

In Fig. 7 ist eine perspektivische Teilansicht der Drescheinrichtung 2 und der Axialabscheidevorrichtung 3 gemäß Fig. 6 in offener Position des Abscheidekorbes 14 dargestellt. In der geöffneten Position hat sich der Abstand von Abscheidekorb 14 beziehungsweise Rahmenelement 28 zum Einlaufbereich 11 vergrößert, was deutlich an dem vergrößerten freiliegenden Teil der Ausnehmung 27 gegenüber der Darstellung in Fig. 6 erkennbar ist. Wie bereits im Zusammenhang mit dem ersten Ausführungsbeispiel gemäß den Fig. 2 bis 5 ausgeführt, kann auf dem rampenförmigen Abschnitt 24 zumindest ein Ableitelement 20 angeordnet sein.

### Bezugszeichenliste

- **1**: Mähdrescher
- **2**: Drescheinrichtung
- **3**: Axialabscheidevorrichtung
- **4**: Trennvorrichtung
- **5 6**: Schrägförderer
- **7**: Dreschtrommel
- **8**: Fördermittel
- **9**: Rotorgehäuse
- **10**: Trennrotor
- **11**: Einlaufbereich
- **12**: Abscheidebereich
- **13**: Zuführtrommel
- **14**: Abscheidekorb
- **15**: Förderelement
- **16**: Kernrohr
- **17**: Führungsleiste
- **18**: Korbwange
- **19**: Leitelement
- **20**: Ableitelement
- **21**: Abscheidekorbsteg
- **22**: Korbdraht
- **23**: Ausnehmung
- **24**: Rampenförmiger Abschnitt
- **25**: Drehachse
- **26**: Leitelement
- **27**: Ausnehmung
- **28**: Rahmenelement

## Patentansprüche

1. Mähdrescher (1) mit einer tangential angeordneten Drescheinrichtung (2), welche wenigstens eine Dreschtrommel (7) und wenigstens einen Abscheidekorb (14) umfasst, sowie mit einer der Drescheinrichtung (2) nachgeordneten, eine Zuführtrommel (13) und zwei Trennrotoren (10) umfassenden Axialabscheidevorrichtung, die einen sich zumindest über die Breite der Trennrotoren (10) erstreckenden Einlaufbereich (11) aufweist, an den der wenigstens eine Abscheidekorb (14) der Drescheinrichtung (2) angrenzt, wobei im Übergangsbereich von dem Abscheidekorb (14) zu dem Einlaufbereich (11) ein sich im Wesentlichen in Längsrichtung des Mähdreschers (1) erstreckendes Leitelement (19, 26) angeordnet ist, **dadurch gekennzeichnet, dass** der Abscheidekorb (14) mit Bezug auf die Dreschtrommel (7) abstandsveränderlich ist, und das Leitelement (16, 29) mit dem Abscheidekorb (14) in Eingriff steht und dessen Abstand (B) zu der Dreschtrommel (7) bei einer Veränderung des Abstandes (A) des Abscheidekorbes (14) zu der Dreschtrommel (7) konstant bleibt.

2. Mähdrescher (1) nach Anspruch 1, **dadurch gekennzeichnet, dass** sich das Leitelement (19, 26) abschnittsweise in Umfangsrichtung des Abscheidekorbes (14) erstreckt.

3. Mähdrescher (1) nach einem der Ansprüche 1 oder 2, **dadurch gekennzeichnet, dass** das Leitelement (19, 26) an einem rampenförmigen Abschnitt (24) angeordnet ist, der sich in axialer Richtung der Axialabscheidevorrichtung (3) ansteigend abschnittsweise über den Einlaufbereich (11) erstreckt.

4. Mähdrescher (1) nach einem der Ansprüche 1 bis 3, **dadurch gekennzeichnet, dass** der Abscheidekorb (14) eine mit der Form des Leitelementes (19, 26) korrespondierende Ausnehmung (23, 27) aufweist.

5. Mähdrescher (1) nach einem der Ansprüche 1 bis 4, **dadurch gekennzeichnet, dass** das Leitelement (19) im Wesentlichen V-förmig ausgebildet ist.

6. Mähdrescher (1) nach Anspruch 3, **dadurch gekennzeichnet, dass** das im Wesentlichen V-förmige Leitelement (19) aus unter einem Winkel zur Oberfläche des rampenförmigen Abschnittes (24) geneigt angeordneten Stegen gebildet ist.

7. Mähdrescher (1) nach einem der Ansprüche 1 bis 4, **dadurch gekennzeichnet, dass** das Leitelement (26) im Wesentlichen schneidenförmig ausgebildet ist.

8. Mähdrescher (1) nach Anspruch 7, **dadurch gekennzeichnet, dass** sich das schneidenförmige Leitelement (26) im Wesentlichen achsparallel zur Längsachse der Axialabscheidevorrichtung (3) erstreckt.

9. Mähdrescher (1) nach Anspruch 3, **dadurch gekennzeichnet, dass** auf dem in axialer Richtung der Axialabscheidevorrichtung (3) ansteigenden rampenförmigen Abschnitt (24) zumindest ein sternförmiges Ableitelement (20) angeordnet ist.

10. Mähdrescher (1) nach einem der Ansprüche 1 bis 9, **dadurch gekennzeichnet, dass** das Leitelement (19) lösbar im Einlaufbereich (11) angeordnet ist.

## Claims

1. A combine harvester (1) comprising a tangentially arranged threshing device (2) which includes at least one threshing drum (7) and at least one separating concave (14), and an axial separation device which is arrange downstream of the threshing device (2) and which includes a feed drum (13) and two separating rotors (10) and which has an intake region (11) which extends at least over the width of the separating rotors (10) and which is adjoined by the at least one separating concave (14) of the threshing device (2), wherein arranged in the transitional region from the separating concave (14) to the intake region (11) is a guide element (19, 26) extending substantially in the longitudinal direction of the combine harvester (1), **characterised in that** the separating concave (14) is variable in spacing in relation to the threshing drum (7) and the guide element (16, 29) is in engagement with the separating concave (4) and the spacing (B) thereof in relation to the threshing drum (7) remains constant upon a change in the spacing (A) of the separating concave (14) relative to the threshing drum (7).

2. A combine harvester (1) according to claim 1 **characterised in that** the guide element (19, 26) extends portion-wise in the peripheral direction of the separating concave (14).

3. A combine harvester (1) according to one of claims 1 and 2 **characterised in that** the guide element (19, 26) is arranged at a ramp-shaped portion (24) which extends rising in the axial direction of the axial separation device (3) portion-wise over the intake region (11).

4. A combine harvester (1) according to one of claims 1 to 3 **characterised in that** the separating concave (14) has a recess (23, 27) corresponding to the shape of the guide element (19, 26).

5. A combine harvester (1) according to one of claims 1 to 4 **characterised in that** the guide element (19) is substantially V-shaped.

6. A combine harvester (1) according to claim 3 **characterised in that** the substantially V-shaped guide element (19) is formed from limbs arranged inclinedly at an angle relative to the surface of the ramp-shaped portion (24).

7. A combine harvester (1) according to one of claims 1 to 4 **characterised in that** the guide element (26) is substantially of a knife-shaped configuration.

8. A combine harvester (1) according to claim 7 **characterised in that** the knife-shaped guide element (26) extends substantially parallel to the longitudinal axis of the axial separation device (3).

9. A combine harvester (1) according to claim 3 **characterised in that** in that at least one star-shaped deflection element (20) is arranged on the ramp-shaped portion (24) which rises in the axial direction of the axial separation device (3).

10. A combine harvester (1) according to one of claims 1 to 9 **characterised in that** the guide element (19) is arranged releasably in the intake region (11).

## Revendications

1. Moissonneuse-batteuse (1) comprenant un dispositif de battage disposé tangentiellement (2), lequel comprend au moins un batteur (7) et au moins une corbeille de séparation (14), ainsi que comprenant un dispositif de séparation axial qui est disposé en aval du dispositif de battage (2) et comprend un tambour d'amenée (13) et deux rotors de séparation (10) et qui comporte une zone d'entrée (11) qui s'étend au moins sur la largeur des rotors de séparation (10) et dont la au moins une corbeille de séparation (14) du dispositif de battage (2) est adjacente, dans la zone de transition de la corbeille de séparation (14) à la zone d'entrée (11) étant disposé un élément de guidage (19, 26) qui s'étend sensiblement dans la direction longitudinale de la moissonneuse-batteuse (1), **caractérisée en ce que** l'écartement de la corbeille de séparation (14) par rapport au batteur (7) est modifiable, et l'élément de guidage (16, 29) est en prise avec la corbeille de séparation (14) et son écartement (B) par rapport au batteur (7) reste constant en cas de modification de l'écartement (A) de la corbeille de séparation (14) par rapport au batteur (7).

2. Moissonneuse-batteuse (1) selon la revendication 1, **caractérisée en ce que**, par endroits, l'élément de guidage (19, 26) s'étend dans la direction circonférentielle de la corbeille de séparation (14).

3. Moissonneuse-batteuse (1) selon une des revendications 1 ou 2, **caractérisée en ce que** l'élément de guidage (19, 26) est disposé sur une portion en forme de rampe (24) qui, dans la direction axiale du dispositif de séparation axial (3), s'étend sur la zone d'entrée (11) de façon ascendante par endroits.

4. Moissonneuse-batteuse (1) selon une des revendications 1 à 3, **caractérisée en ce que** la corbeille de séparation (14) comporte un évidement (23, 27) correspondant à la forme de l'élément de guidage (19, 26).

5. Moissonneuse-batteuse (1) selon une des revendications 1 à 4, **caractérisée en ce que** l'élément de guidage (19) est conformé sensiblement en V.

6. Moissonneuse-batteuse (1) selon la revendication 3, **caractérisée en ce que** l'élément de guidage conformé sensiblement en V (19) est formé par des barrettes disposées, de manière inclinée, selon un angle par rapport à la surface de la portion en forme de rampe (24).

7. Moissonneuse-batteuse (1) selon une des revendications 1 à 4, **caractérisée en ce que** l'élément de guidage (26) est conformé sensiblement en forme de lame.

8. Moissonneuse-batteuse (1) selon la revendication 7, **caractérisée en ce que** l'élément de guidage en forme de lame (26) s'étend sensiblement parallèlement axialement à l'axe longitudinal du dispositif de séparation axial (3).

9. Moissonneuse-batteuse (1) selon la revendication 3, **caractérisée en ce que** sur la portion en forme de rampe (24) ascendante dans la direction axiale du dispositif de séparation axial (3) est disposé au moins un élément déflecteur en forme d'étoile (20).

10. Moissonneuse-batteuse (1) selon une des revendications 1 à 9, **caractérisée en ce que** l'élément de guidage (19) est disposé de façon amovible dans la zone d'entrée (11).
